(19) Europäisches Patentamt / European Patent Office / Office européen des brevets

(11) **EP 4 385 906 A1**

(12) **EUROPÄISCHE PATENTANMELDUNG**

(43) Veröffentlichungstag:
**19.06.2024 Patentblatt 2024/25**

(21) Anmeldenummer: 23204517.9

(22) Anmeldetag: **19.10.2023**

(51) Internationale Patentklassifikation (IPC):
***B64G 1/10*** *(2006.01)* ***G01S 13/90*** *(2006.01)*

(52) Gemeinsame Patentklassifikation (CPC):
**B64G 1/1035;** G01S 13/904; G01S 13/9058

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **16.12.2022 DE 102022133667**

(71) Anmelder: **Airbus Defence and Space GmbH 82024 Taufkirchen (DE)**

(72) Erfinder:
• **FISCHER, Christian**
 **82024 Taufkirchen (DE)**
• **PETRAT, Lutz**
 **82024 Taufkirchen (DE)**
• **GIERLICH, Roland**
 **82024 Taufkirchen (DE)**
• **CEBA-VEGA, Francisco**
 **82024 Taufkirchen (DE)**

(74) Vertreter: **LKGLOBAL Lorenz & Kopf Patentanwalt Attorney at Law PartG mbB Brienner Straße 11 80333 München (DE)**

(54) **RESSOURCENMANAGEMENT FÜR SATELLITENBASIERTE BEOBACHTUNG**

(57) Es ist ein Beobachtungssystem (50) zum Beobachten eines Interessengebietes beschrieben. Das Beobachtungssystem weist mehrere mobile Sensorträgerplattformen (100) und eine Ressourcenzuweisungseinheit (200) auf. Die mobilen Sensorträgerplattformen können beispielsweise als Satelliten mit einem Sensorsignalemitter und/oder einem Sensorsignalempfänger ausgestaltet sein. Die Ressourcenzuweisungseinheit ist ausgestaltet, Aufgaben an die Sensorträgerplattformen basierend auf verschiedenen Kriterien zuzuweisen, um die Effizienz bei der Ausführung der Aufgaben und die Erfüllungsrate zu verbessern.

Fig. 1

EP 4 385 906 A1

## Beschreibung

Technisches Gebiet

Die vorliegende Beschreibung betrifft ein Beobachtungssystem zum Beobachten eines Interessengebietes. Insbesondere betrifft die Beschreibung ein Beobachtungssystem, welches satellitengestütztes Beobachten und Überwachen ermöglicht und sich durch eine automatisierte Ressourcenzuweisung auszeichnet, die einige Vorteile gegenüber einer manuellen Ressourcenzuweisung aufweist.

Technischer Hintergrund

Um Informationen über ein Interessengebiet zu erhalten, kann eine Vielzahl von technischen Geräten dafür eingesetzt werden, das Interessengebiet mit Sensoren zu beobachten, die Informationen in unterschiedlichen Spektralbereichen des elektromagnetischen Spektrums erfassen. Grundsätzlich können Sensoren auf bodengestützten, seegestützten oder luftgestützten Plattformen angebracht sein und die Umgebung beobachten. Jeder dieser Ansätze zeichnet sich durch bestimmte Eigenschaften aus.

Bodengestützte Sensoren können stationär und fest installiert oder auch mobil sein. Die flugzeuggestützten Systeme sind naturgemäß mobil. Daneben können Sensoren auf Satelliten angebracht werden. Dies ermöglicht es, eine große und flexible Abdeckung für die Beobachtung der Erdoberfläche und des Luftraumes zu erreichen.

Die Beobachtung aus der Luft bzw. aus einem Erdorbit hat den Vorteil, dass auch schwer zugängliche Bereiche der Erdoberfläche (dies bezieht sich sowohl auf Land als auch auf Wasser) oder auch die Luftlage mit wenig Aufwand erfasst werden können. Mitunter ermöglicht dieser Ansatz eine hohe Genauigkeit für die Beobachtung und bietet den Vorteil, dass die Sensoren als solche vergleichsweise schwer entdeckbar sind.

Werden Satelliten im niedrigen oder mittleren Erdorbit (LEO: low earth orbit, niedriges Erdorbit; MEO: medium earth orbit, mittleres Erdorbit) als Sensorträgerplattform verwendet, befinden sich diese typischerweise dauerhaft in Bewegung, so dass die Sensorträgerplattform und auch die jeweiligen Sensoren ihre relative Position mit Bezug zu dem zu beobachtenden Interessengebiet kontinuierlich verändern.

Bei satellitengestützten Radarsystemen werden beispielsweise Radarsignale von einem Satelliten gesendet. Die von aufzuklärenden Objekten reflektierten Signale werden von satellitengestützten Empfängern, flugzeuggestützten Empfängern, und/oder bodengestützten Empfängern empfangen.

Beschreibung

Es kann als Aufgabe betrachtet werden, die Ressourcenzuweisung in einem satellitengestützten Beobachtungssystem zu verbessern, insbesondere gegenüber einer ständig zu aktualisierenden manuellen Zuweisung. Diese Aufgabe stellt sich insbesondere bei gleichzeitiger Beobachtung mehrerer Interessensgebiete mit einhergehenden Konflikten bei der Ressourcenzuweisung.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist ein Beobachtungssystem zum Beobachten eines Interessengebietes angegeben. Das Beobachtungssystem weist eine Mehrzahl von mobilen Sensorträgerplattformen und eine Ressourcenzuweisungseinheit auf. Eine erste Gruppe von Sensorträgerplattformen aus der Mehrzahl von mobilen Sensorträgerplattformen enthält eine Sensoranordnung mit einem Sensorsignalemitter und eine zweite Gruppe von Sensorträgerplattformen aus der Mehrzahl von mobilen Sensorträgerplattformen enthält eine Sensoranordnung mit einem Sensorsignalempfänger. Das Beobachtungssystem ist ausgestaltet, mit der Mehrzahl von mobilen Sensorträgerplattformen zu einem vorgegebenen Zeitpunkt in mindestens einer von drei Betriebsarten betrieben zu werden. Jede mobile Sensorträgerplattform ist ausgestaltet, in einer ersten Betriebsart das Interessengebiet statisch zu beobachten, in einer zweiten Betriebsart das Interessengebiet dynamisch zu verschieben, in Abhängigkeit von mindestens einem zu beobachtenden Objekt, und in einer dritten Betriebsart Sensorsignale in das Interessengebiet zu emittieren, deren Reflexionen von mindestens einem Empfänger, der von der Mehrzahl von mobilen Sensorträgerplattformen räumlich getrennt ist, empfangbar sind. Die Ressourcenzuweisungseinheit ist ausgestaltet, einer Aufgabe, die mit einer der drei Betriebsarten verknüpft ist, mindestens eine mobile Sensorträgerplattform zuzuweisen, basierend auf einem oder mehreren der folgenden Kriterien: relative Position zwischen der mobilen Sensorträgerplattform und dem Interessengebiet, Bewegungsrichtung der Sensorträgerplattform, Bewegungsrichtung eines zu beobachtenden Objekts in dem Interessengebiet, Anzahl der Sensorträgerplattformen mit Sichtverbindung zu dem Interessengebiet, Lage der Sensorträgerplattform, Ausrichtung des Sensorsignalemitters und des Sensorsignalempfängers, verfügbare Ressourcen der Sensorträgerplattform für Beobachtungsaufgaben, Priorität der Beobachtungsaufgabe.

Die mobilen Sensorträgerplattformen können grundsätzlich auf der Erdoberfläche, in der Luft oder in einem Orbit um die Erde außerhalb der Erdatmosphäre positioniert sein und einem vorgegebenen Bewegungspfad folgen.

Eine Sensorträgerplattform kann lediglich für das Emittieren von Sensorsignalen ausgestaltet sein. Eine andere Sensorträgerplattform kann lediglich für das Empfangen von Sensorsignalen ausgestaltet sein. Es ist auch denkbar, dass eine Sensorträgerplattform sowohl Funktionsbausteine für das Emittieren als auch für das Empfangen von Signalen enthält und entsprechend beide Funktionen ausführen kann. Die Mehrzahl von mobilen Sensorträgerplattformen ist so ausgestaltet, dass die einzelnen Sensorträgerplattformen sich in Abhängigkeit ihrer Funktion an zwei Gruppen zuweisen lassen: Sensorträgerplattformen, welche einen Sensorsignalemitter enthalten, sind Mitglieder der ersten Gruppe, und Sensorträgerplattformen, welche einen Sensorsignalempfänger enthalten, sind Mitglieder der zweiten Gruppe. Es ist denkbar und möglich, dass eine Sensorträgerplattform Mitglied in sowohl der ersten Gruppe als auch der zweiten Gruppe ist. Manche Sensorträgerplattformen können aber auch Mitglied in nur einer einzelnen Gruppe sein.

Die erste Gruppe enthält mindestens eine Sensorträgerplattform mit einem Sensorsignalemitter, bevorzugt aber mindestens zwei oder mehrere solcher Sensorträgerplattformen. Die zweite Gruppe enthält mindestens eine Sensorträgerplattform mit einem Sensorsignalempfänger, bevorzugt aber mindestens zwei oder mehrere solcher Sensorträgerplattformen.

In anderen Worten bedeutet das, dass eine bestimmte Sensorträgerplattform entweder (1) nur einen Sensorsignalemitter oder (2) nur einen Sensorsignalempfänger, oder (3) sowohl einen Sensorsignalemitter als auch einen Sensorsignalempfänger enthält. Beispielsweise enthält eine erste Sensorträgerplattform einen Sensorsignalemitter, der ein Signal emittiert, und eine zweite Sensorträgerplattform (und/oder die erste Sensorträgerplattform) enthält einen Sensorsignalempfänger, der ein reflektiertes Signal empfängt.

Als Sensoranordnung wird vorliegend mindestens ein Teil der für einen Beobachtungsvorgang vorgesehenen Komponenten einer Sensorträgerplattform verstanden. Bei diesen Komponenten handelt es sich insbesondere um einen oder mehrere Sender, welche ein elektromagnetisches Signal abgeben (vorliegend als Sensorsignalemitter bezeichnet) und/oder einen oder mehrere Sensorsignalempfänger, welche ein elektromagnetisches Signal empfangen (vorliegend als Sensorsignalempfänger bezeichnet).

Das Beobachtungssystem mit der Mehrzahl von Sensorträgerplattformen und den zugehörigen jeweiligen Sensoranordnungen ist beispielsweise ausgestaltet, Funktionen eines Radars zu implementieren. Dabei sendet der Sensorsignalemitter ein Signal aus, welches von Objekten reflektiert wird. Die reflektierten Signale werden von Empfängern empfangen, um daraus Rückschlüsse auf die Art und/oder Bewegung dieses Objektes zu ziehen. Die Funktionsweise eines solchen Radarsystems ist in dieser Hinsicht hinlänglich bekannt. Die reflektierten Signale können von dem Sensorsignalempfänger derjenigen mobilen Sensorträgerplattform empfangen werden, von deren Sensorsignalemitter das anfängliche Signal ausgesendet wurde. Alternativ oder zusätzlich können die reflektierten Signale auch von einem Sensorsignalempfänger einer anderen mobilen Sensorträgerplattform oder einem anderweitigen Empfänger empfangen und ausgewertet werden.

Die mobile Sensorträgerplattform kann mit seinem Sensorsignalemitter zu einem bestimmten Zeitpunkt in einer Betriebsart oder und mit dem Sensorsignalempfänger in einer oder zwei Betriebsarten betrieben werden. Das bedeutet beispielsweise, dass der Sensorsignalemitter zu verschiedenen Zeitpunkten Signale verschiedener Frequenzen und/oder Signale in verschiedene Richtungen emittieren kann. Die Betriebsart, in welcher die Sensorträgerplattform zu betreiben ist, wird durch die auszuführende Aufgabe vorgegeben. So kann beispielsweise die Ressourcenzuweisungseinheit wahlweise festlegen, in welcher Betriebsart oder in welchen Betriebsarten jede der mobilen Sensorträgerplattformen betrieben wird.

In der ersten Betriebsart wird ein vergleichsweise großes frei vorgebbares Interessengebiet beobachtet bzw. überwacht. Das Interessengebiet wird beispielsweise durch seine Koordinaten und/oder räumliche Ausdehnung vorgegeben und wird nach einem bestimmten Schema durch eine oder mehrere geeignete Sensorträgerplattformen beobachtet. In der ersten Betriebsart verbleiben die Grenzen des Interessengebietes während der gesamten Aufgabe typischerweise gleich und verschieben sich nicht, das Interessengebiet wird also über die gesamte Dauer der Aufgabe statisch beobachtet. Allerdings können die Grenzen des Interessengebietes auch verändert werden. Die erste Betriebsart legt also das Interessengebiet als solches in den Fokus der Beobachtung.

In der zweiten Betriebsart wird ein vergleichsweise kleines Interessengebiet (also deutlich kleiner als das Interessengebiet, welches in der ersten Betriebsart beobachtet wird) beobachtet. Dieses kleine Interessengebiet kann mit einer höheren Wiederholrate, Auflösung oder Genauigkeit beobachtet werden. Ebenso ist in der zweiten Betriebsart vorgesehen, dass ein entdecktes Objekt in dem Interessengebiet verfolgt wird, was auch als dynamische Beobachtung bezeichnet werden kann. Zu diesem Zweck kann die Sensorträgerplattform und/oder der Sensorsignalemitter und/oder der Sensorsignalempfänger nach Bedarf ausgerichtet werden, beispielsweise um der Bewegung des beobachteten Objektes zu folgen und/oder die Bewegung der Sensorträgerplattform relativ zu dem beobachteten Objekt zu kompensieren.

In der dritten Betriebsart sendet die Sensorträgerplattform ein Radarsignal aus. Dieses Radarsignal wird von beobachteten Objekten reflektiert und kann dann von räumlich in der Nähe des beobachteten Objekts befindlichen Empfängern empfangen werden. Diese Betriebsart kann auch als unterstützende Betriebsart bezeichnet werden, weil in dieser Betriebsart das Beobachten und Verfolgen des beobachteten Objekts durch Empfänger ermöglicht und unterstützt wird, die selber kein Radarsignal aussenden müssen. Bei den Empfängern kann es sich beispielsweise um Flugzeuge oder um Bodenstationen handeln. Da diese Empfänger ihrerseits keine Radarsignale emittieren müssen, sind sie ihrerseits besser gegen Aufklärung geschützt, weil die Empfänger an der Aufklärung lediglich passiv teilnehmen.

Die Ressourcenzuweisungseinheit ist ausgestaltet, eine Zuweisung zwischen einer Aufgabe und einer oder mehreren Sensorträgerplattformen vorzunehmen. Bei der Aufgabe kann es sich beispielsweise um eine Beobachtungsaufgabe handeln, welche in der ersten oder zweiten Betriebsart ausgeführt wird. Es kann sich aber auch um eine Unterstützungsaufgabe handeln, die in der dritten Betriebsart ausgeführt wird.

Die Ressourcenzuweisungseinheit weist einer Aufgabe beispielsweise mehrere Sensorträgerplattformen zu, insbesondere dergestalt, dass für eine Beobachtungsaufgabe mindestens drei bi-statische Signalpfade entstehen.

Um die Zuweisung zwischen der Aufgabe und den Sensorträgerplattformen sinnvoll vorzunehmen, wird mindestens eines oder es werden mehrere aus einer Reihe von Kriterien berücksichtigt. Die relative Position der mobilen Sensorträgerplattform zu dem Interessengebiet, in welchem die Aufgabe ausgeführt werden muss, gibt an, ob eine Sensorträgerplattform eine Sichtverbindung zu dem Interessengebiet hat, und/oder ob die Sichtverbindung zu dem gesamten Interessengebiet besteht, und/oder für welchen Zeitraum diese Sichtverbindung besteht. Gerade bei mobilen Sensorträgerplattformen, die einer vorgegebenen Bewegung folgen, ist diese Information wichtig. Die Bewegungsrichtung der Sensorträgerplattform gibt an, wie sich die relative Position der Sensorträgerplattform zu dem Interessengebiet verändert. So ist es vorteilhaft, wenn eine Sensorträgerplattform sich auf das Interessengebiet zu bewegt statt von diesem weg, weil dann der Zeitraum, in welchem die Sichtverbindung zwischen Sensorträgerplattform und Interessengebiet besteht, länger ist, als wenn die Sensorträgerplattform das Interessengebiet schon weitestgehend passiert hat. Dennoch kann auch eine Sensorträgerplattform in eine Aufgabe eingebunden werden, wenn sie diese Aufgabe nur noch für eine kurze Zeit ausführen kann. Eine solche Zuweisung hat den Vorteil, dass andere Sensorträgerplattformen entlastet werden. Ebenso kann die Bewegungsrichtung eines zu beobachtenden Objekts berücksichtigt werden. Es kann vorteilhaft sein, wenn diese Bewegungsrichtung sich mindestens teilweise mit der Bewegungsrichtung einer Sensorträgerplattform deckt. Weiterhin kann die Anzahl der Sensorträgerplattformen mit Sichtverbindung zu dem Interessengebiet berücksichtigt werden. Beispielsweise kann eine Aufgabe einer Sensorträgerplattform zugewiesen werden, wenn für diese Aufgabe nur eine bestimmte einzelne Sensorträgerplattform infrage kommt. Dies ist der Fall, wenn zu dem Interessengebiet dieser Aufgabe lediglich eine Sensorträgerplattform eine Sichtverbindung hat. Weiterhin kann die Lage der Sensorträgerplattform berücksichtigt werden, wobei die Lage die räumliche Orientierung der Sensorträgerplattform angibt. Dieses Kriterium zeigt an, ob eine Sensorträgerplattform vor Ausführung der Aufgabe noch auf das Interessengebiet ausgerichtet werden muss, damit der Sensorsignalemitter und der Sensorsignalempfänger auf geeignete Weise eingestellt sind. Neben der Lage der Sensorträgerplattform kann auch die relative Ausrichtung des Sensorsignalemitters und des Sensorsignalempfängers in einer Sensorträgerplattform berücksichtigt werden. Gegebenenfalls ist es weniger aufwendig, den Sensorsignalemitter und/oder Sensorsignalempfänger in der Sensorträgerplattform auszurichten, als die Sensorträgerplattform als Ganzes. Weiterhin kann für diese Zuweisung der Aufgabe zu einer Sensorträgerplattform auch berücksichtigt werden, welche freien Ressourcen eine Sensorträgerplattform hat sowie die Priorität der Aufgabe.

Dieser Ansatz ermöglicht ein flexibles Betreiben eines Beobachtungssystems und das Abarbeiten von Aufgaben in einem höchst variablen Szenario, das eine hohe Anzahl von Nutzeranfragen enthält, welche sich auch sehr dynamisch verändern können. Die Aufgaben werden daher dynamisch zugewiesen und das System zeichnet sich durch eine hohe Erfüllungsrate aus.

Gemäß einer Ausführungsform ist die Ressourcenzuweisungseinheit ausgestaltet, die Gesamtzahl der Sensorträgerplattformen mit einer Sichtverbindung zu dem Interessengebiet der Aufgabe zu ermitteln, wobei die Ressourcenzuweisungseinheit ausgestaltet ist, bei mehreren Aufgaben zunächst eine Zuweisung nach Verfügbarkeit vorzunehmen, bei der zunächst derjenigen Aufgabe eine Sensorträgerplattform zugewiesen wird, welche die niedrigste Zahl von Sensorträgerplattformen mit Sichtverbindung zu dem betreffenden Interessengebiet hat.

Diese Information kann beispielsweise herangezogen werden, um für jede Aufgabe die Gesamtzahl der grundsätzlich infrage kommenden Sensorträgerplattformen zu bestimmen. Beispielsweise kann dann zunächst eine Zuweisung zwischen einer Aufgabe und den Sensorträgerplattformen vorgenommen werden, wenn für eine Aufgabe nur eine Sensorträgerplattform infrage kommt. Andere Aufgaben, die von mehreren Sensorträgerplattformen bedient werden können, können dann immer noch anderen Sensorträgerplattformen zugewiesen werden.

In dem Modus der Zuweisung nach Verfügbarkeit können die Aufgaben so sortiert werden, dass die Aufgaben in einer Liste aufsteigend nach der Anzahl der für die jeweilige Aufgabe infrage kommenden Sensorträgerplattformen geordnet werden. Die Zuweisung zwischen Aufgaben und Sensorträgerplattform(en) kann dann gemäß der Reihenfolge dieser Liste erfolgen, wobei in einer bevorzugten Variante eine Sensorträgerplattform für folgende Aufgaben so lange in der Liste bleibt, wie diese Sensorträgerplattform weitere verfügbare Ressourcen für zusätzliche Aufgaben hat.

Gemäß einer weiteren Ausführungsform ist die Ressourcenzuweisungseinheit ausgestaltet, anschließend an die Zuweisung nach Verfügbarkeit eine Zuweisung nach Priorität der Aufgaben vorzunehmen, bei der zunächst Aufgaben mit höherer Priorität an Sensorträgerplattformen zugewiesen werden.

Im ersten Schritt werden also zunächst diejenigen Aufgaben bedient, welche ausschließlich von einzelnen Sensorträgerplattformen ausgeführt werden können. Anschließend werden die Sensorträgerplattformen, die mehrere Aufgaben unterstützen können, nach Priorität der Aufgaben verteilt.

Die Aufgaben können in einer Liste nach Priorität sortiert werden, wobei die Aufgaben mit höherer Priorität weiter vorne stehen. Die Aufgaben werden dann gemäß ihrer Reihenfolge in der nach Priorität sortierten Liste an die Sensorplattformen zugewiesen.

Gemäß einer weiteren Ausführungsform werden weitere Aufgaben nach Priorität in absteigender Reihenfolge an Sensorträgerplattformen zugewiesen.

Gemäß einer weiteren Ausführungsform ist die Ressourcenzuweisungseinheit ausgestaltet, die Zuweisung einer Aufgabe zu einer mobilen Sensorträgerplattform in gleichmäßigen oder ungleichmäßigen Zeitabständen erneut vorzunehmen.

Gerade bei mobilen Sensorträgerplattformen und bei veränderlichen Nutzeranfragen (die in dem Beobachtungssystem als Aufgabe bezeichnet werden) sowie gegebenenfalls bei bewegten zu verfolgenden Objekten ist es sinnvoll, die Zuweisung von Aufgaben zu Sensorplattformen nach gewissen Zeiten erneut vorzunehmen. Die hier angesprochenen Zeitabstände können vorab festgelegte Zeitabstände sein. Dies bedeutet aber nicht zwangsläufig, dass die Aufgabe dann sofort neu zugewiesen wird. Vielmehr kann die Aufgabe bei der aktuellen Sensorträgerplattform bleiben, wenn keine andere Sensorträgerplattform in einer besser geeigneten Position ist.

Gemäß einer weiteren Ausführungsform ist die Ressourcenzuweisungseinheit ausgestaltet, die Zuweisung einer Aufgabe zu einer mobilen Sensorträgerplattform erneut vorzunehmen, wenn die Ressourcenzuweisungseinheit eine weitere Aufgabe erhält.

Grundsätzlich, wenn eine neue Nutzeranfrage an die Ressourcenzuweisungseinheit gerichtet wird, kann diese Nutzeranfrage als Aufgabe an die Sensorträgerplattformen zugewiesen werden, welche noch ausreichend Ressourcen haben. Alternativ kann aber auch der gesamte Vorgang der Zuweisung von Aufgaben zu Sensorträgerplattformen erneut ausgeführt werden. Die neue Aufgabe kann beispielsweise eine Priorität haben, welche höher ist als die bereits zugewiesenen Aufgaben. Somit erhält die neue Aufgabe eine vorrangige Behandlung bei der nächsten Zuweisung. Die Priorität einer Aufgabe wird üblicherweise durch einen Bediener des Beobachtungssystems vorgegeben.

Gemäß einer weiteren Ausführungsform ist die Ressourcenzuweisungseinheit ausgestaltet, ein Kommando für die Anpassung der Lage einer Sensorträgerplattform zu erzeugen und dieses Kommando an die Sensorträgerplattform zu übertragen.

Dieses Kommando dient dazu, um die Sensorträgerplattform in eine räumliche Orientierung zu bringen, in welcher sie eine Aufgabe erfüllen kann. Um die Lage anzupassen, greift die Sensorträgerplattform auf eine Antriebseinheit zurück.

Gemäß einer weiteren Ausführungsform ist die Ressourcenzuweisungseinheit ausgestaltet, ein Kommando für die Anpassung der Ausrichtung von Sensorsignalemitter und/oder Sensorsignalempfänger zu erzeugen und dieses Kommando an eine Sensorträgerplattform zu übertragen.

Dieses Kommando dient dazu, um die Senderichtung eines Sensorsignalemitters und/oder die Empfangsrichtung eines Sensorsignalempfängers anzupassen. Diese Anpassung kann mechanisch und/oder elektronisch erfolgen. Der Sensorsignalemitter und/oder der Sensorsignalempfänger können jeweils mit einer Aufhängung an der Sensorträgerplattform bewegbar befestigt sein. Diese Aufhängung kann beispielsweise mittels Aktuatoren bewegt werden, um den Sensorsignalemitter und/oder den Sensorsignalempfänger auszurichten. Diese Ausrichtung kann aber auch auf elektronischem Wege erfolgen, indem die Senderichtung und/oder die Empfangsrichtung einer Antenne, die als Sensorsignalemitter oder als Sensorsignalempfänger dient, anzupassen.

Gemäß einer weiteren Ausführungsform ist die Mehrzahl von mobilen Sensorträgerplattformen eine Mehrzahl von Satelliten in einem Erdorbit.

Die Sensorträgerplattformen sind bevorzugt als Satelliten ausgestaltet und bewegen sich in einem Erdorbit. Die mehreren Satelliten können die Erde in einer sogenannten Satellitenkonstellation in einer oder mehreren Orbitalebenen umkreisen.

Gemäß einer weiteren Ausführungsform wird in der ersten Betriebsart und/oder der zweiten Betriebsart das Interessengebiet beobachtet, indem eine erste Sensorträgerplattform ein Signal emittiert und die erste Sensorträgerplattform und/oder mindestens eine andere Sensorträgerplattform die von einem beobachteten Objekt reflektierten Signale empfängt.

Gemäß einer weiteren Ausführungsform ist eine Sensorträgerplattform ausgestaltet, in der ersten Betriebsart und/oder der zweiten Betriebsart das Interessengebiet basierend auf einem Zeitstempel von erfassten Daten zu beobachten, so dass der Sensorsignalemitter Radarsignale in einen Bereich des Interessengebietes emittiert, dessen Beobachtungsdaten den ältesten Zeitstempel in dem Interessengebiet haben.

Üblicherweise kann nicht das gesamte Interessengebiet gleichzeitig beobachtet werden. Vielmehr muss der Sensorsignalemitter und/oder ein Sensorsignalempfänger aufgrund physikalischer Gegebenheiten (Antennenkeule, Beobachtungswinkel, und weitere Eigenschaften der Antennen, welche als Sensorsignalemitter und Sensorsignalempfänger verwendet werden) auf einen Bereich des Interessengebietes ausgerichtet werden. Somit werden mehrere Beobachtungsdaten zeitlich nacheinander erfasst. Die jeweiligen Beobachtungsdaten können mit einem Zeitstempel versehen werden. Der Sensorsignalemitter kann so angesteuert werden, dass er auf den Bereich des Interessengebietes ausgerichtet wird, dessen Beobachtungsdaten den ältesten Zeitstempel haben.

Gemäß einer weiteren Ausführungsform wird in der dritten Betriebsart das Interessengebiet beobachtet, indem eine Sensorträgerplattform ein Signal emittiert und der Empfänger an Bord eines in der Luft befindlichen Luftfahrzeugs angeordnet ist und die von einem beobachteten Objekt reflektierten Signale empfängt.

In dieser Betriebsart kann ein Flugzeug das zu beobachtende Objekt verfolgen, ohne dass das Flugzeug eigene Radarsignale emittieren muss. Die Radarsignale werden von den Satelliten emittiert, sodann von dem beobachteten Objekt reflektiert, um dann von dem Flugzeug empfangen und ausgewertet zu werden. Dies hat den Vorteil, dass dieses Flugzeug besser gegen elektromagnetische Aufklärungsmaßnahmen getarnt ist, weil das Flugzeug lediglich reflektierte Radarsignale empfängt, aber nicht aussendet.

Gemäß einer weiteren Ausführungsform ist die Ressourcenzuweisungseinheit räumlich getrennt von der Mehrzahl von mobilen Sensorträgerplattformen angeordnet. Alternativ ist die Ressourcenzuweisungseinheit strukturell einer mobilen Sensorträgerplattform zugewiesen.

Die Ressourcenzuweisungseinheit kann beispielsweise in einer Bodenstation angeordnet sein. Die Ressourcenzuweisungseinheit hat zu mehreren mobilen Sensorträgerplattformen eine Datenverbindung. Diese Datenverbindung ist eine drahtlose Verbindung, über welche üblicherweise Daten bidirektional übertragen werden können. Somit kann die Ressourcenzuweisungseinheit Daten an die Sensorträgerplattformen übertragen und von den Sensorträgerplattformen empfangen.

Neben der Datenverbindung zwischen der Ressourcenzuweisungseinheit und den Sensorträgerplattformen können auch Datenverbindungen zwischen den einzelnen Sensorträgerplattformen bestehen.

Es ist aber auch denkbar, dass die Ressourcenzuweisungseinheit an Bord einer Sensorträgerplattform (beispielsweise auf einem Satelliten) angeordnet ist.

Die Ressourcenzuweisungseinheit verwaltet die Zuweisung von Aufgaben zu Sensorträgerplattformen und somit die Nutzung der Sensoranordnungen derjenigen Sensorträgerplattformen, zu denen die Ressourcenzuweisungseinheit eine Datenverbindung hat. In einer Satellitenkonstellation ist es denkbar, dass mehrere Ressourcenzuweisungseinheiten verwendet werden, die räumlich getrennt voneinander aber dennoch miteinander verbunden sind. Somit kann sichergestellt werden, dass zu jedem Satelliten der Satellitenkonstellation eine Datenverbindung zu einer Ressourcenzuweisungseinheit besteht, unabhängig davon, wo der jeweilige Satellit sich mit Bezug zu der Erde befindet.

Das hier beschriebene Beobachtungssystem und die zugehörige Ressourcenzuweisungseinheit ermöglichen eine Beobachtung von Interessengebieten mit hoher Genauigkeit und unabhängig von lokalen Informationsquellen sowie ein reduziertes Risiko für lokale Sensorträger. Die Ressourcenzuweisungseinheit ermöglicht es, dass Beobachtungssystem flexibel zur Erfüllung sich ändernder Nutzeranfragen zu betreiben.

Kurze Beschreibung der Figuren

Nachfolgend werden anhand der beigefügten Zeichnungen einige Details näher beschrieben. Die Darstellungen sind schematisch und nicht maßstabsgetreu.

Gleiche Bezugszeichen beziehen sich auf gleiche oder ähnliche Elemente. Es zeigen:

Fig. 1   eine schematische Darstellung eines Satelliten in einem Erdorbit;

Fig. 2   eine schematische Darstellung eines Satelliten;

Fig. 3   eine schematische Darstellung eines Beobachtungssystems;

Fig. 4   eine schematische Darstellung eines Satelliten in einem Erdorbit;

Fig. 5   eine schematische Darstellung der Erdoberfläche mit zwei Interessengebieten;

Fig. 6   eine schematische Darstellung verschiedener Betriebsmodi eines satellitengestützten Beobachtungssystems.

Detaillierte Beschreibung

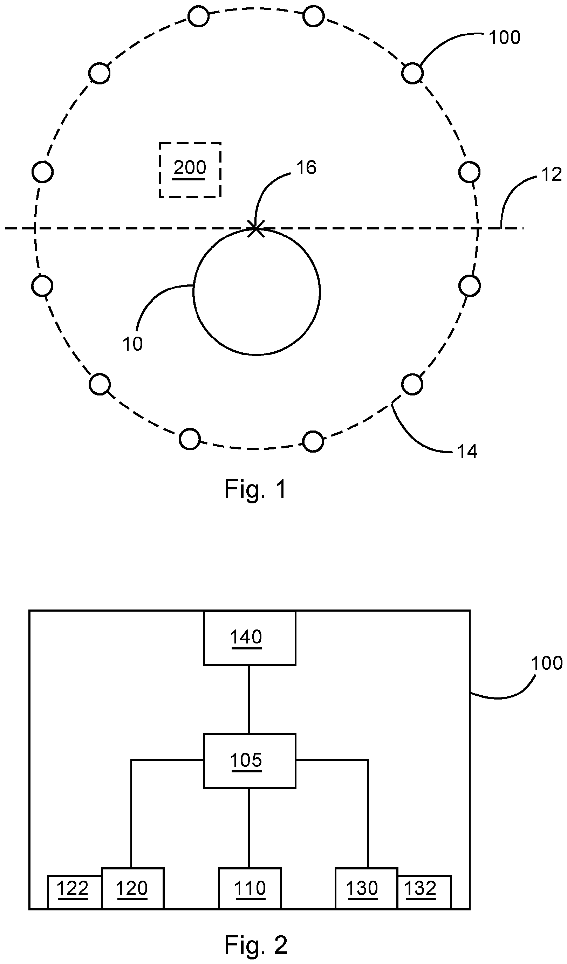

Fig. 1 zeigt einen Satelliten 100, welcher als Sensorträgerplattform ausgestattet ist in einem Orbit 14 und die Erde 10. In derselben Umlaufbahn können mehrere Satelliten angeordnet sein, welche die Erde in derselben Orbitalebene umkreisen. Je nach Position eines Satelliten in dem Orbit 14 sind unterschiedliche Bereiche der Erdoberfläche einsehbar.

Der Satellit 100 hat Sichtverbindung zu einem Punkt oder Bereich 16 auf der Erdoberfläche oder in der Atmosphäre oberhalb der Erdoberfläche, wenn eine gerade Linie von dem Satelliten 100 zu dem Bereich 16 gezogen werden kann. Wenn Sichtverbindung zu dem Bereich 16 besteht, kann ein Satellit den Bereich 16 beobachten. In der Regel besteht Sichtverbindung zwischen einem Satelliten und einem Bereich 16 auf der Erdoberfläche, wenn sich der Satellit oberhalb der Horizontlinie 12 befindet.

Eine Satellitenkonstellation enthält eine Mehrzahl von Satelliten, welche die Erde in unterschiedlichen Orbitalebenen umkreisen. In jeder Orbitalebene sind mehrere Satelliten üblicherweise mit einem gleichen relativen Abstand zueinander angeordnet. Somit kann nahezu zu jedem Zeitpunkt nahezu jeder Bereich der Erdoberfläche von mindestens einem Satelliten beobachtet werden.

Wie aus der schematischen Darstellung der Fig. 1 unschwer zu erkennen ist, kommt nicht jeder Satellit zu jedem Zeitpunkt für jede Beobachtungsaufgabe infrage. Vielmehr muss mindestens das Kriterium der Sichtlinie erfüllt sein.

Eine Ressourcenzuweisungseinheit 200 ist in Fig. 1 eingezeichnet. Die Ressourcenzuweisungseinheit 200 ist mit einigen oder mehreren Satelliten in Datenverbindung, um Aufgaben an die Satelliten zu übertragen und zuzuweisen. Dabei berücksichtigt die Ressourcenzuweisungseinheit 200 die weiter oben genannten Parameter bei dieser Zuweisung.

Fig. 2 zeigt schematisch den Aufbau eines Satelliten 100 mit seinen relevanten Funktionseinheiten. Der Satellit 100 enthält eine Steuereinheit 105, eine Datenübertragungsschnittstelle 110, einen Sensorsignalemitter 120, ein Sensorsignalempfänger 130 sowie ein Triebwerk 140.

Die Datenübertragungsschnittstelle 110 ist ausgestaltet, Daten an andere Satelliten und/oder die Ressourcenzuweisungseinheit zu übertragen bzw. zu empfangen. Die Datenübertragungsschnittstelle ist insbesondere für leitungslose Kommunikation ausgestaltet, beispielsweise unter Verwendung von optischen Signalen oder Hochfrequenzsignalen.

Der Sensorsignalemitter 120 ist ausgestaltet, Radarsignale zu emittieren, um Objekte in dem beobachteten Interessengebiet zu detektieren. Beispielsweise ist der Sensorsignalemitter 120 eine Antenne oder ein Antennenarray, und kann elektronisch gesteuert werden. Der Sensorsignalemitter 120 kann mit einer Aufhängung 122 in oder an dem Satelliten 100 bewegbar befestigt sein, um die Abstrahlungsrichtung und/oder Abstrahlcharakteristik des Sensorsignalemitters 120 anzupassen, oder sich in fester Aufhängung mit dem gesamten Satelliten ausrichten. Die Aufhängung 122 kann beispielsweise eine Bewegung des Sensorsignalemitters um mindestens eine Achse, bevorzugt um zwei oder drei senkrecht aufeinander stehenden Achsen, ausführen, um den Sensorsignalemitter in eine gewünschte Richtung zu lenken.

Der Sensorsignalempfänger 130 ist das Gegenstück zu dem Sensorsignalemitter 120. Der Sensorsignalempfänger 130 empfängt Signale, welche der Sensorsignalemitter emittiert hat und die von einem Objekt in dem Interessengebiet reflektiert wurden. Der Sensorsignalempfänger empfängt also die reflektierten Radarsignale, um basierend darauf ein Objekt und dessen Bewegung in dem Interessengebiet zu verfolgen. Der Sensorsignalempfänger 130 ist wie der Sensorsignalemitter 120 mit einer Aufhängung 132 in oder an dem Satelliten 100 bewegbar befestigt sein, oder sich in fester Aufhängung mit dem gesamten Satelliten ausrichten.

Der Sensorsignalemitter 120 und der Sensorsignalempfänger 130 können strukturell getrennt voneinander in oder an dem Satelliten 100 angeordnet sein. In diesem Fall können der Sensorsignalemitter und der Sensorsignalempfänger unabhängig voneinander bewegt und auf ein Interessengebiet gerichtet werden. Es ist aber auch denkbar, dass der Sensorsignalemitter 120 und der Sensorsignalempfänger 130 über eine einzelne Aufhängung in oder an dem Satelliten 100 bewegbar angeordnet sind. In diesem Fall sind Sensorsignalemitter und Sensorsignalempfänger immer in dieselbe Richtung ausgerichtet.

Die Aufhängung 122, 132 kann beispielsweise eine kardanische Aufhängung sein, welche mit einem oder mehreren Antrieben versehen ist, um die gewünschte Bewegung hervorzurufen.

Ein Triebwerk 140 ist angeordnet, um eine notwendige oder gewünschte Bewegung des Satelliten 100 hervorzurufen. Das Triebwerk 140 kann verwendet werden, um den Satelliten 100 in eine gewünschte Richtung auszurichten.

Eine Steuereinheit 105 ist angeordnet und ausgestaltet, die funktionalen Einheiten des Satelliten 100 zu konfigurieren und anzusteuern. Beispielsweise ermittelt oder empfängt die Steuereinheit 105 ein Steuerkommando für das Triebwerk 140 über die Datenübertragungsschnittstelle 110. Die Steuereinheit 105 gibt sodann die notwendigen Kommandos an das Triebwerk 140, damit eine entsprechende Antriebskraft erzeugt wird. Ebenso kann die Steuereinheit 105 Steuerkommandos zum Ausrichten des Sensorsignalemitters 120 und der Sensorsignalempfängers 130 anfangen oder basierend auf einer Beobachtungsaufgabe bestimmen und die Aufhängungen 122, 132 entsprechend ansteuern. In Abhängigkeit der relativen Position und/oder Ausrichtung eines Satelliten zu dem zu beobachtenden Interessengebiet kann es notwendig sein, nicht nur den Sensorsignalempfänger und oder den Sensorsignalempfänger auszurichten, sondern die Ausrichtung des Satelliten insgesamt zu verändern. Entsprechend erzeugt die Steuereinheit dann die notwendigen Steuerkommandos basierend auf der zugewiesenen Aufgabe.

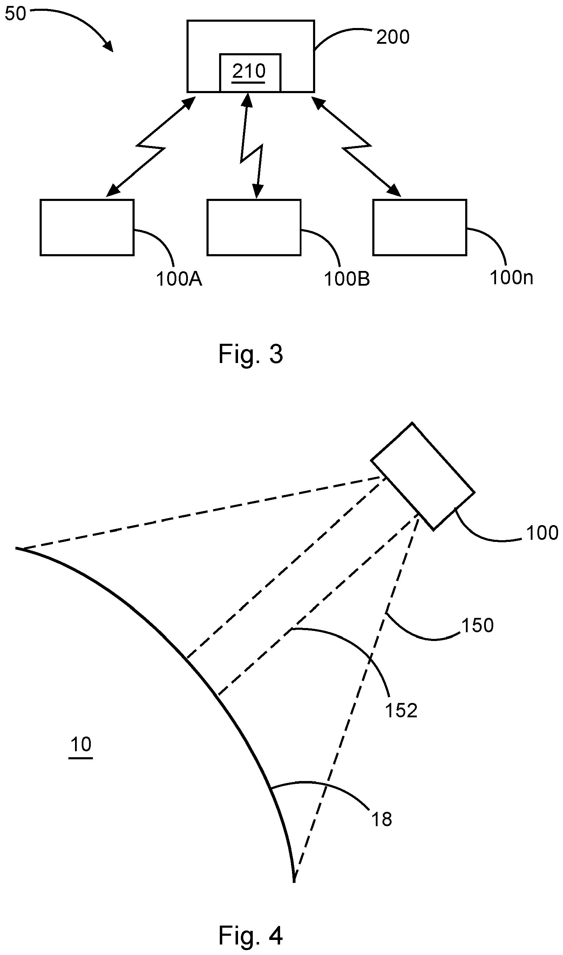

Fig. 3 zeigt eine schematische Darstellung eines Beobachtungssystems 50. Das Beobachtungssystem 50 enthält mehrere Satelliten 100A, 100B, ..., 100n sowie eine Ressourcenzuweisungseinheit 200. Die Anzahl der Satelliten in dem Beobachtungssystem 50 ist nicht auf eine bestimmte Zahl begrenzt, vielmehr können mehrere Satelliten in einer oder mehreren Orbitalebenen einer Satellitenkonstellation Bestandteil des Beobachtungssystems 50 sein. Ebenso können zwei oder mehr Ressourcenzuweisungseinheiten 200 verwendet werden, um Aufgaben an mehrere Satelliten zuzuweisen. Dabei können die zwei oder mehr Ressourcenzuweisungseinheiten über ein Mobilfunknetz oder ein leitungsgebundenes Netz miteinander verbunden sein, um miteinander synchronisiert zu werden und/oder die Aufgaben koordiniert an die Gesamtheit der Satelliten zuzuweisen.

Die Ressourcenzuweisungseinheit 200 weist eine Datenübertragungsschnittstelle 210 auf. Die Datenübertragungsschnittstelle 210 ist ausgestaltet, eine Datenverbindung mit der Datenübertragungsschnittstelle 110 jedes einzelnen der Satelliten 100 herzustellen, so dass Daten zwischen der Ressourcenzuweisungseinheit und jedem einzelnen Satelliten ausgetauscht werden können.

Wie jeder Satellit 100, der allgemein auch als Sensorträgerplattform bezeichnet werden kann, kann in mindestens einer von drei Betriebsarten betrieben werden, nämlich den oben genannten Betriebsarten. Diese Betriebsarten können in Abhängigkeit einer Aufgabe für den Satelliten frei ausgewählt werden. Es können aber auch zwei Betriebsarten parallel ausgeführt werden, indem die Steuereinheit eines Satelliten den Sensorsignalempfänger entsprechend ansteuert.

Das Beobachtungssystem 50 ist ausgestaltet, flexibel auf die Anfragen von Nutzern zu reagieren. Es müssen nahezu beliebige Kombinationen aus verschiedenen Beobachtungsmodi (Betriebsarten) mitunter parallel realisiert werden. Flächen und Geometrien des Interessengebietes in der ersten Betriebsart können frei wählbar sein, um maximale Flexibilität zu geben. Die in einer Satellitenkonstellation befindlichen Satelliten (die als Transmit- und Receivesatelliten bezeichnet werden können) werden entsprechend der Nutzeranfragen in Bezug auf verschiedene Betriebsarten optimal eingesetzt und durch die Ressourcenzuweisungseinheit an Aufgaben zugewiesen. Diese Zuweisung erfolgt beispielsweise dynamisch, so dass mit jeder neuen Nutzeranfrage auch eine andere Sensorkombination zur Durchführung der verschiedenen Betriebsarten ausgewählt wird - ggf. mit anderer Priorisierung als vor der neuen Anfrage.

Diese technische Herausforderung wird gelöst, in dem ein spezielles Ressourcenmanagement insbesondere für die Sensorsignalemitter und Sensorsignalempfänger angewendet wird. Dieses Sensormanagement kann über die Ressourcenzuweisungseinheit entweder am Boden oder in dedizierten Satelliten erfolgen, die ein Teil der Konstellation sein können und ggf. als sog. Processing Nodes auch Datenverarbeitungsschritte ausführen können. Diese Processing Node Satelliten oder auch die Bodenstationen, die das Management der einzelnen Sensoren übernehmen, sollten z.B. über optische Links direkten Kontakt zu den Satelliten haben, die koordiniert werden müssen, um in einem bestimmten Gebiet die gestellten Aufgaben zu übernehmen.

Die Betriebsarten können entweder zeitgleich oder aufeinanderfolgend aktiviert werden, und zwar je nach aktueller Anforderungslage der Nutzer. Den Betriebsarten und/oder den Anfragen können Prioritäten zugewiesen werden. Des Weiteren werden unter Berücksichtigung der Position der Satelliten im Orbit in Bezug zum Interessengebiet sowie der Fluglage die Eignung aller Satelliten, die verschiedenen Betriebsarten zu unterstützen, ermittelt, gefolgt von einer Zuweisung der Satelliten zu den verschiedenen Aufgaben.

In der ersten Betriebsart werden zu verfolgende Objekte in einem großen Bereich detektiert. Hierbei werden ausschließlich Sensoren von Satelliten verwendet, nämlich der Sensorsignalemitter und der Sensorsignalempfänger desselben oder unterschiedlicher Satelliten.

In der zweiten Betriebsart wird ein konkretes zu verfolgendes Objekt oder eine Gruppe von Objekten verfolgt. Bei dieser Verfolgung kann eine höhere Aktualisierungsfrequenz verwendet werden als in der ersten Betriebsart. Auch in der zweiten Betriebsart werden ausschließlich Sensoren von Satelliten verwendet.

Die in der ersten und zweiten Betriebsart erfassten Informationen können über eine Datenverbindung an eine Bodenstation oder einen beliebigen Empfänger gesendet werden. Der Empfänger kann außerhalb der Sensorträgerplattform angeordnet sein oder er kann ein Bestandteil oder ein Funktionsmodul der Sensorträgerplattform, welche die Informationen erfasst hat, sein. Im letzteren Fall enthält die Sensorträgerplattform also Verarbeitungskapazitäten, und erfüllt die Funktion eines oben genannten Processing Nodes. Alle von diesem Processing Node empfangenen Daten können daraufhin gemeinsam ausgewertet werden, um die Position eines oder mehrerer zu verfolgender Objekte zu ermitteln. Die Sensorträgerplattform, welche den Processing Node enthält, kann auch die Ressourcenzuweisungseinheit enthalten.

In der dritten Betriebsart stellt ein Satellit oder mehrere Satelliten ein Radarsignal zur Verfügung, dessen Reflexionen von zu verfolgenden Objekten von anderen Luftfahrzeugen erfasst und ausgewertet werden, um Rückschlüsse auf die Position der zu verfolgenden Objekte zu ziehen.

Fig. 4 zeigt einen Satelliten 100 mit Bezug zu der Erde 10. mit Bezug auf die Erdoberfläche 18 können unterschiedlich große Bereiche 150, 152 beobachtet werden. Der erste Bereich 150 ist größer als der zweite Bereich 152. Der erste Bereich 150 ist derjenige Bereich, zu dem der Satellit 100 eine Sichtverbindung haben kann und den der Satellit 100 in Abhängigkeit von der Lageregelung des Satelliten beobachten kann. Der zweite Bereich 152 ist mitunter deutlich kleiner als der erste Bereich 150 und kann durch eine Einstellung von Sensorsignalemitter und Sensorsignalempfänger beobachtet werden.

Nutzeranfragen werden in dem Beobachtungssystem 50 in Aufgaben umgewandelt. Dieser Umwandlungsvorgang kann beispielsweise von der Ressourcenzuweisungseinheit ausgeführt werden. Eine Aufgabe enthält alle notwendigen Informationen, um das gewünschte operationelle Verhalten des Beobachtungssystems zu erreichen. Insbesondere enthält eine Aufgabe die folgenden Informationen: Koordinaten und Ausdehnung des Interessengebietes sowie Betriebsart, in welcher das Interessengebiet beobachtet werden soll. Zusätzlich zu den oben genannten charakterisierenden Merkmalen einer Betriebsart können auch noch weitere Anforderungen an das Beobachtungssystem gestellt werden, wie zum Beispiel: die operationellen Anforderungen an das System (Verhalten: z.B. eine sequentielle Abdeckung großer Gebiete oder Zielverfolgung, Aktivierungszeit $t_{Ak}$: zulässige Verzögerung für die Bereitstellung einer Ressource zu der Aufgabe, Verfügbarkeitsdauer tv: Mindestdauer für die die Ressourcen nach der Aktivierungszeit verfügbar sein muss (wirkt z.B. als Einschränkung falls ein Satellit in Kürze den Horizont erreicht)), die zu erfüllenden Leistungsanforderungen, z.B. Positionsauflösung, Status der Aufgabe: "aktiv" bzw. "inaktiv". Dies erlaubt, anhand vordefinierter Start- und Endzeitpunkte die Aufgabe nicht zum nächstmöglichen Zeitpunkt aufzunehmen, sondern zeitlich geplant und ggf. wiederholt auszuführen, z.B. im Falle von Routineaufgaben, Priorität, zur Ressourcenvergabe bei Konflikten, und optional die Menge der benötigten Ressourcen.

Das System unterstützt das simultane Ausführen verschiedener Aufgaben und ist somit in der Lage, große Gebiete im Hinblick auf Flugbewegungen zu überwachen, sowie parallel einzelne Ziele oder Zielgruppen (z.B. Kampflugzeugrotten) mit hoher Genauigkeit und Updaterate innerhalb des großen Gebietes tracken zu können ("Track-While-Scan"). Das System erlaubt hierfür, Ressourcen (Satelliten bzw. Sensorzeit) flexibel verschiedenen Aufgaben zuzuweisen. Die Zuweisung kann automatisch erfolgen, anhand einer Bewertung der Eignung aller Satelliten für die jeweiligen Aufgaben, und/oder anhand der Prioritäten der jeweiligen Aufgaben.

Ein beispielhaftes Verfahren für die Zuweisung von Ressourcen, welches von der Ressourcenzuweisungseinheit implementiert sein kann, kann wie folgt ausgestaltet sein: Die Zuweisung der Satelliten zu den Aufgaben wird für einen gegebenen Zeitpunkt bestimmt und in geeigneten zeitlichen Abständen erneuert, um den Veränderungen der Satelliten-Positionen relativ zum Interessengebiet, bzw. der Sichtbarkeit, Rechnung zu tragen. Die Zuweisung kann darüber hinaus jederzeit bei Veränderungen des Aufgaben-Profils bzw. der Prioritäten erneuert werden. Somit sind flexible Übergänge zwischen verschiedenen Gruppen von Aufgaben und Betriebsmodi möglich.

Eine Neuzuweisung aller Satelliten erfolgt beispielsweise zu Beginn, bei Änderung der Prioritäten von Aufgaben oder bei neu hinzukommenden aktiven Aufgaben. Eine Aktualisierung der Zuweisungen erfolgt beispielsweise, sofern zuvor aktive Aufgaben beendet sind bzw. inaktiv werden.

Für die Neuzuweisung werden alle derzeit verfügbaren Satelliten (nicht in Wartungsmodus o.Ä.) bestimmt. Im Anschluss wird für jeden verfügbaren Satelliten eine Prüfung der Eignung hinsichtlich aller aktiver Aufgaben anhand folgender Bedingungen durchgeführt:

das Interessengebiet liegt innerhalb des Horizonts (Sichtbarkeit) des Satelliten; der Einfallswinkel $\eta$ zur Referenzkoordinate des Interessengebiet (Winkel zwischen der Senkrechten und der Richtung zum Satelliten) liegt innerhalb eines vorgegebenen Intervalls $\eta_{min}$, $\eta_{max}$ (z.B. 0..80 Grad), der Satellit kann innerhalb der maximalen Aktivierungszeit zu der Aufgabe beitragen (schließt Satelliten, die aktuell bereits zu dieser Aufgabe beitragen, ein), der Satellit erfüllt entsprechend der Orbit-Vorhersage die Mindest-Verfügbarkeitsdauer.

Satelliten, für die die Eignungsprüfung nur eine Aufgabe ergeben hat, werden der jeweiligen Aufgabe zugewiesen. Satelliten, die für mehrere Aufgaben geeignet wären, werden über eine Konfliktauflösung durch ein iteratives Schema den zugehörigen möglichen Aufgaben Konflikt wie folgt zugewiesen:

Zu Anfang sind alle Aufgaben noch zu bedienen, ausgedrückt über Binärwerte $b_k = 1$.

1. Für alle Aufgaben wird ein Ressourcenanteil bestimmt

$$r_k = \left. (P_k b_k) \middle/ \sum_k (P_k b_k) \right.$$

2. Aus der Anzahl $M_k$ der für die derzeitige Aufgabe k in Frage kommenden Ressourcen werden der derzeitigen Aufgabe die ersten $N_k$ zugewiesen, mit

$$N_k = \text{Min}\big(\text{Runden}\big(r_k M_k\big); \Delta L_k\big)$$

wobei $\Delta L_k$ die Anzahl der noch benötigten Ressourcen angibt, bis die Maximalzahl für die jeweilige Aufgabe erreicht ist. Anmerkung: für Aufgaben ohne Maximalzahl gilt $\Delta L_k = \infty$)

3. Die gerade bearbeitete Aufgabe wird nicht weiter berücksichtigt, d.h. $b_k = 0$

4. Das Schema wird bei 1. mit der nächsten Aufgabe fortgesetzt, so lange bis alle Aufgaben mit Konflikten bearbeitet wurden.

Beispiel: 9 Satelliten sollen zugewiesen werden, die für 3 Aufgaben geeignet wären, $P_1 = 1$; $P_2 = 0,5$; $P_2 = 0,3$, wobei jeweils keine Obergrenze festgelegt ist:
Aufgabe 1 bekommt

$$\text{Min}\left(\text{Runden}\left(9 \cdot \frac{1}{1,8}\right); \infty\right) = 5$$

Satelliten zugewiesen, d.h. es sind noch 4 Satelliten verfügbar.

Aufgabe 2 bekommt

$$\text{Min}\left(\text{Runden}\left(4 \cdot \frac{0,5}{0,8}\right); \infty\right) = 3$$

Satelliten zugewiesen, d.h. es ist noch 1 Satellit verfügbar.

Aufgabe 3 bekommt den verbleibenden Satelliten zugewiesen.

Für eine Aktualisierung der Zuweisungen bleiben (1.) Satelliten, die weiterhin die jeweiligen Bedingungen erfüllen, ihren bisherigen Aufgaben zugeordnet (Minimierung der erforderlichen Manöver bzw. Inaktivitätszeiten), werden (2.) Satelliten, die bisher nicht zugewiesen waren, bzw. die für die bisherige Aufgabe nicht mehr geeignet sind, erneut hinsichtlich Eignung für die aktiven Aufgaben geprüft, und wird (3.) ggf. für die unter 2. fallenden Satelliten eine Konfliktauflösung wie im Falle der Neuzuweisung beschrieben durchgeführt.

Der Zugriff eines Satelliten auf ein Interessengebiet erfordert abhängig von den Koordinaten des Interessengebietes sowie von der Orbitposition des Satelliten eine Ausrichtung der Antenne, was prinzipiell mechanisch und/oder elektronisch erfolgen kann. Es wird in diesem Kontext angenommen, dass die Satelliten über mechanische Agilität zur Vor-Ausrichtung auf das jeweils zugewiesene Interessengebiet verfügen. Durch die Lageregelung des Satelliten wird die Ausrichtung auf den "Referenzpunkt" trotz der Relativbewegung des Satelliten beibehalten, und dass die Satelliten über elektronische Agilität der Radarsensoren/-antennen verfügen, zur schnellen Fein- Ausrichtung innerhalb des Interessengebietes. Die elektronische Ansteuerung erfolgt nach den in den folgenden Abschnitten beschriebenen Regeln.

Durch diesen kombinierten Ansatz wird der benötigte elektronisch zugängliche Schwenkbereich der Antenne auf ein technisch beherrschbares Maß begrenzt, die hohe Agilität nur dort wo benötigt bereitgestellt, auf das Interessengebiet beschränkt, und dennoch globale Abdeckung ermöglicht, wie in Fig. 4 mit den Bereichen 150, 152 gezeigt.

Die Aktivierungszeit bestimmt sich aus den Leistungsdaten der Lageregelung (Winkelbeschleunigung, Winkelrate), der gegenwärtigen Orientierung des Satelliten und der für die jeweilige Aufgabe (Interessengebiet) benötigte Orientierung. Die Verfügbarkeitsdauer ergibt sich anhand der Prüfung der zukünftigen Orbitpositionen hinsichtlich der obigen Bedingungen, abzüglich der Aktivierungszeit.

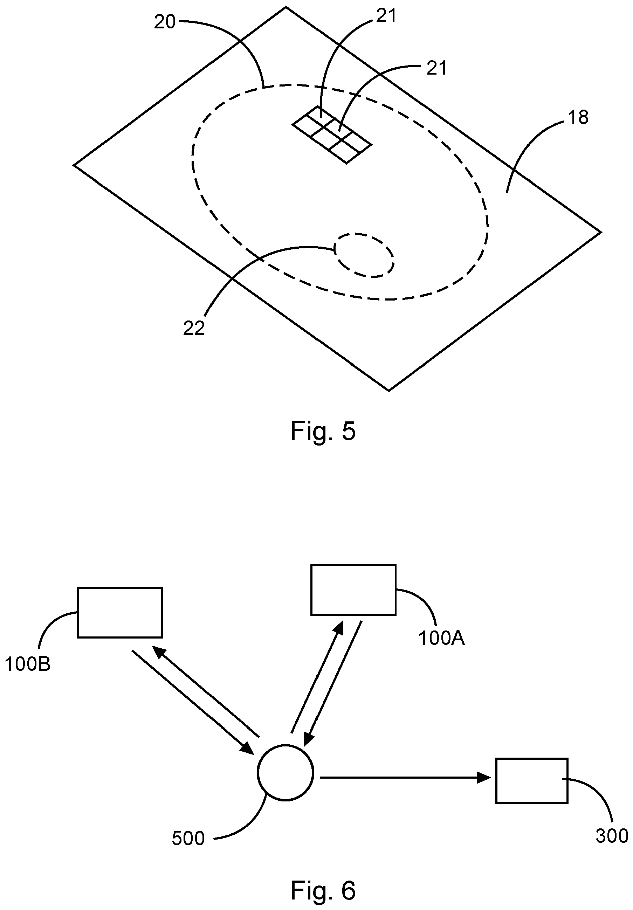

Mit Bezug zu Fig. 5 werden die Betriebsarten der Satelliten näher erläutert.

Die Beobachtung zielt beispielsweise im Allgemeinen auf ein Interessengebiet, das aufgrund seiner Größe mit den vorhandenen Ressourcen nicht zu jedem Zeitpunkt an jedem Ort abgedeckt werden kann. Daher ist es erforderlich, die Antennenkeulen der Sensorsignalemitter entsprechend eines zeitlichen Ablaufes über das Interessengebiet 20 zu bewegen. Das gewählte Verfahren soll dabei sicherstellen, dass jeder Ort des Interessengebietes nach einer möglichst kleinen Aktualisierungszeit erneut abgedeckt wird.

Das Interessengebiet wird sukzessive durch Weiterbewegung der Antennenkeulen abgetastet. Die Beleuchtung eines bestimmten Ortes erfolgt jeweils durch einen oder mehrere Sender (Tx-Multi-Beam On Target). Die Sendeantennendiagramme können optional über "beam-shaping" aufgeweitet werden, z.B. zur Vergrößerung der Footprints bei steilen Einfallswinkeln. Um Multilateration zu ermöglichen, muss eine Detektion in mindestens drei Übertragungswegen gleichzeitig erfolgreich sein. Damit dies mit ausreichender Wahrscheinlichkeit eintritt, wird für die Empfangssatelliten Digitale Strahlformung (Digital Beamforming) mit mehreren Antennenkeulen gleichzeitig vorgesehen. Auf diese Weise kann jeder Empfangssatellit Signale von allen ausgeleuchteten Orten im Interessengebiet gleichzeitig empfangen. Optional kann zusätzlich die Antennenkeule in Empfangsrichtung durch Digitale Strahlformung vergrößert werden, z.B. durch Generierung von zusätzlichen Antennenkeulen.

Die Richtungen der Antennenkeulen der Sender werden zu jedem Zeitpunkt über ein Optimierungsverfahren bestimmt, das die Form der jeweiligen Antennen-Hauptkeule am Boden berücksichtigt. Die Ausrichtung der Empfangsantennen folgt der Ausrichtung der Sendeantennen. Zunächst wird das Interessengebiet in ein Raster eingeteilt. Die aktuelle Abdeckung der Antennenhauptkeulen in diesem Raster wird ermittelt als binäres Ergebnis (Rasterpunkt "abgedeckt" oder "nicht abgedeckt").

Für die Optimierung der Blickrichtungen wird eine Karte des Informationsalters des Interessengebietes verwendet. D. h. für jeden Rasterpunkt 21 (wovon in dem Gebiet 20 einige beispielhaft gezeigt sind) in dem Interessengebiet 20 wird gespeichert, zu welcher Zeit der Punkt erfasst wurde. Wird der Rasterpunkt zur gegenwärtigen Zeit erfasst, beträgt das Informationsalter Null (Sekunden), während beispielsweise einem Punkt, der zuletzt vor N Sekunden von einer Antennenkeule erfasst wurde, das Informationsalter N zugewiesen wird. Es werden somit zu jeder Zeit zunächst alle Rasterpunkte entsprechend der Differenz zum vorigen Zeitschritt mit einem entsprechend Alterszuwachs beaufschlagt, während am Ende der Optimierung in diesem Schritt die Punkte, die derzeit erfasst werden, das Informationsalter Null zugewiesen bekommen.

Die Optimierung wird mithilfe einer globalen Minimum-Suche, z.B. Particle Swarm, unter Verwendung einer Kostenfunktion durchgeführt. Damit der Parameterraum für die Optimierung nicht zu groß wird, kann optional eine Vorauswahl von N (z.B. 250) Rasterpunkten mit dem größten Informationsalter vorgenommen werden.

Falls zwei oder mehrere Sender gleichzeitig jeweils einen Ort erfassen sollen (Tx-Multi-Beam On Target), werden Gruppen von Sendesatelliten entsprechend der gewünschten Zahl simultaner Antennenkeulen gebildet. Die Auswahl hierfür erfolgt anhand größtmöglicher Ähnlichkeit der Form der Antennenkeulen. Die Ähnlichkeitsprüfung zwischen jeweils zwei Antennenkeulen, binär dargestellt im Raster, erfolgt z.B. durch logischen XOR Vergleich. Durch logische ODER Verknüpfung wird eine kombinierte Antennenkeule für die Gruppe erzeugt. Die weitere Optimierung erfolgt dann anhand der kombinierten Antennenkeulen.

Die neuen Positionen der Antennenkeulen ergeben sich als Optimierung über die Kostenfunktion, die eine Gewichtung über folgende Aspekte darstellt: (1) Informationsalter: die Antennenkeulen sollen so ausgerichtet werden, dass möglichst Orte mit großem Informationsalter bevorzugt werden. Daher bestimmt das Informationsalter des jüngsten Rasterpunktes innerhalb der Antennenkeule die Kosten, die umso höher werden, je jünger der jüngste Punkt ist; (2) Effizienz hinsichtlich Vermeidung von überlappenden Antennenkeulen. Im Falle von Rasterpunkten, die von mehreren (kombinierten) Antennenkeulen erfasst werden, entstehen mit wachsendem Überlapp immer höhere zusätzliche Kosten; und (3) Effizient hinsichtlich der Lage innerhalb des Interessengebietes: für Antennenkeulen, die in Richtung des Randes des Gebietes zeigen, werden die Kosten immer höher, je mehr Fläche außerhalb des Interessengebietes erfasst wird.

Als Ergebnis der Optimierung wird für jede (kombinierte) Antennengruppe eine Position im gerasterten Interessengebiet gefunden. Anhand der Ausdehnung und Form der gerasterten Antennenkeulen wird das Informationsalter für alle erfassten Rasterpunkte auf Null gesetzt und das beschriebene Verfahren im nächsten Zeitschritt wiederholt.

In Fig. 5 ist für das Gebiet 20 gezeigt, wie diese Beobachtung mittels Rasterpunkten 21 in der ersten Betriebsart aussehen kann. Daneben kann in einer anderen Betriebsart das abgegrenzte Gebiet 22 beobachtet werden.

Die dynamische Verfolgung von mehreren Zielen (oder Gruppen von Zielen) kann mit hoher zeitlicher und räumlicher Auflösung in der zweiten Betriebsart erfolgen, beispielhaft gezeigt mit Bezug zu dem Gebiet 22, das deutlich kleiner ist als das Gebiet 20.

Die Beleuchtung des Interessengebiets 22 (d.h., das Aussenden von Radarsignalen in das Interessengebiet) erfolgt durch einen oder optional durch mehrere Sendesatelliten simultan (Tx-Multi-Beam On Target). Um Multilateration zu ermöglichen, erfolgt der Empfang durch so viele Satelliten, wie erforderlich sind, um mit hoher Wahrscheinlichkeit in mindestens drei bi-statischen Übertragungswegen eine erfolgreiche Detektion zu erreichen. Es werden zwei Zustände unterschieden: "Ziel(e) erfasst" und "Ziele nicht erfasst". Zu Beginn überwacht das System eine vorgegebene Koordinate ("Fangbereich"), auf diese sind hierfür die Antennenkeulen der zugewiesenen Sender und Empfänger kontinuierlich ausgerichtet. Das erste nach Beginn der Aufgabe detektierte Ziel kann automatisiert als Referenzziel definiert werden. Alternativ kann die Auswahl durch einen Bediener beeinflusst werden. Anhand der Ergebnisse der Multilateration (Position und Geschwindigkeit) werden die Antennenkeulen zu jedem Zeitpunkt so nachgeführt, d.h. die Richtungen fortlaufend so aktualisiert, dass das Referenzziel im Zentrum bleibt. Aufgrund der fluktuierenden Zielrückstreuung können zwischenzeitlich Ausfälle der Detektion auftreten, gegenüber denen das System aufgrund der Ausdehnung der Antennenkeule tolerant ist, d.h. trotz Bewegung bleibt das Ziel für eine gewisse Zeit innerhalb der Antennenkeulen, auch wenn die Antennenkeulen nicht nachgeführt werden. Bei Verlust der Detektion kann das System die Antennenkeulen auf der letzten Position erfolgreicher Detektion festhalten. Alternativ kann das System anhand des letzten ermittelten Geschwindigkeitsvektors des Ziels eine Voraussage hinsichtlich der erwarteten derzeitigen Position des Zieles vornehmen. Eine andere Möglichkeit ist, dass das System die derzeitige Position des Ziels anhand einer anderen, parallel ausgeführten Betriebsart bestimmt. Die Auswahl der jeweiligen Strategie kann durch die Historie der vorigen Detektionen unterstützt werden (z.B. Ziel agiert hoch-agil, oder befindet sich in einem längeren, stetigen Anflug).

Fig. 6 zeigt eine zusammenfassende schematische Darstellung von drei Betriebsarten. In der ersten oder zweiten Betriebsart sendet der Satellit 100A ein Signal in Richtung eines zu beobachtenden Objekts 500. Die reflektierten Radarsignale werden von demselben Satelliten 100A oder einem zweiten Satelliten 100B empfangen. In der ersten oder zweiten Betriebsart sind in die Beobachtung lediglich satellitengestützte Sensoren involviert. Die erste und zweite Betriebsart wurden mit Bezug zu den Fig. 3 bis 5 beispielhaft beschrieben.

In der dritten Betriebsart, welche im Folgenden beispielhaft detaillierter beschrieben wird, werden die von dem verfolgten Objekt 500 reflektierten Signale zu einem Empfänger 300 reflektiert, welcher beispielsweise ein Sensorsignalempfänger an Bord eines Flugzeuges ist. In dieser dritten Betriebsart unterstützen die Satelliten 100A und 100B einen Beobachtungsvorgang, bei dem ein Interessengebiet von Empfängern an Bord von Flugzeugen (oder auch von bodengestützten Empfängern) beobachtet wird.

Die dritte Betriebsart ermöglicht passiven Radarbetrieb der Flugzeuge durch Beleuchtung eines Interessengebietes mittels der Sendesatelliten 100A, 100B.

Die Sendesatelliten 100A, 100B werden mit einer Antenne und Instrumentierung geeignet für zwei Frequenzbänder ausgestattet, damit in der dritten Betriebsart Radarsignale ausgesendet werden, die von Systemen an Bord von Flugzeugen empfangen werden können. Alternativ können zwei Typen von Sendesatelliten verwendet werden. Die dritte Betriebsart wird realisiert, indem einer oder mehrere Sendesatelliten auf die Radarfrequenz der Flugzeuge umgeschaltet werden. Eine Empfangsmöglichkeit für die für die dritte Betriebsart verwendete Frequenz ist in den Satelliten üblicherweise nicht vorgesehen, da sie die Komplexität der Empfangssatelliten ohne nennenswerten Mehrwert steigern würde.

Die Detektion und Lokalisierung des beobachteten Objekts 500 erfolgt im Flugzeug 300 separat durch über einen Datenlink übertragene Informationen. Bei ausreichender Zahl an verwendeten Sendern kann eine Positionsbestimmung im einzelnen Flugzeug über Multilateration erfolgen. Da das System über keine satellitengestützten Empfänger im Empfangsband der Flugzeugradare verfügt, kann im Falle, dass keine sonstige Information zur erforderlichen Ausrichtung der Antennenkeulen vorliegt, mit weiteren Ressourcen der Konstellation parallel zu der dritten Betriebsart auch die erste oder zweite Betriebsart durchgeführt werden. Anhand der gewonnenen Detektionen und Lokalisierungen von Referenzzielen können dann die Richtungen der Antennenkeulen der Sender im X-Band Betrieb fortlaufend aktualisiert werden.

Optional können die Flugzeuge 300 weiter unterstützt werden, indem die zusätzlich von der Satellitenkonstellation gewonnenen Detektionen/Lokalisierungen über geeignete Datenübertragungswege zur Unterstützung an die Flugzeuge geschickt werden.

Optional können über geeignete Kommunikationswege (z.B. Line-of-Sight Laserlink) Kontrollinformationen, z.B. zur Steuerung der Antennenkeulen, von den Flugzeugen an die Satelliten 100A, 100B der Konstellation übermittelt werden.

Das hier beschriebene Beobachtungssystem ist unabhängig von flugzeug- oder bodengebundener Sensorik (senderseitig gilt dies in allen Betriebsarten, empfängerseitig gilt dies für die erste und zweite Betriebsart). Ein Interessengebiet wird aus einem Satellitenorbit beobachtet. Hierbei kann beispielsweise ein multistatisches Radarsystem verwendet werden, dessen Frequenzbereich auf den jeweiligen Anwendungsfall angepasst werden kann. Hierdurch kann auch die Sichtbarkeit von gegen Radaraufklärung getarnten Luftfahrzeugen erhöht werden, weil solche Luftfahrzeuge typischerweise und überwiegend gegen mono-statische Detektion vom Boden oder aus der Luft geschützt sind.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Bezugszeichenliste

| | |
|---|---|
| 10 | Erde |
| 12 | Horizont-Linie |
| 14 | Orbit |
| 16 | Bereich auf der Erdoberfläche oder in der Atmosphäre |
| 18 | Erdoberfläche |
| 20 | Interessengebiet für großflächige Beobachtung |
| 21 | Rasterpunkt |
| 22 | Interessengebiet für detaillierte Beobachtung |
| 50 | Beobachtungssystem |
| 100 | Satellit, Sensorträgerplattform |
| 105 | Steuereinheit |
| 110 | Datenübertragungsschnittstelle (senden, empfangen) |
| 120 | Sensorsignalemitter, Antenne, elektronisch gesteuert |
| 122 | Aufhängung |
| 130 | Sensorsignalempfänger, Antenne |
| 132 | Aufhängung |
| 140 | Triebwerk |
| 150 | erster Bereich, zugänglich durch Lageregelung |
| 152 | zweiter Bereich, zugänglich durch Einstellung der Antennen |
| 190 | Datenübertragungsstrecke |
| 200 | Ressourcenzuweisungseinheit |
| 210 | Datenübertragungsschnittstelle |
| 300 | Empfänger |
| 500 | beobachtetes Objekt |

**Patentansprüche**

1. Beobachtungssystem (50) zum Beobachten eines Interessengebietes (20, 22), aufweisend:

eine Mehrzahl von mobilen Sensorträgerplattformen (100); und
eine Ressourcenzuweisungseinheit (200);
wobei eine erste Gruppe von Sensorträgerplattformen (100) aus der Mehrzahl von mobilen Sensorträgerplattformen (100) eine Sensoranordnung mit einem Sensorsignalemitter (120) enthält;
wobei eine zweite Gruppe von Sensorträgerplattformen (100) aus der Mehrzahl von mobilen Sensorträgerplattformen (100) eine Sensoranordnung mit einem Sensorsignalempfänger (130) enthält;
wobei das Beobachtungssystem ausgestaltet ist, mit der Mehrzahl von mobilen Sensorträgerplattformen (100) zu einem vorgegebenen Zeitpunkt in mindestens einer von drei Betriebsarten betrieben zu werden;
wobei jede mobile Sensorträgerplattform (100) ausgestaltet ist:

in einer ersten Betriebsart das Interessengebiet (20, 22) statisch zu beobachten;
in einer zweiten Betriebsart das Interessengebiet (20, 22) dynamisch zu verschieben, in Abhängigkeit von mindestens einem zu beobachtenden Objekt (500);
in einer dritten Betriebsart Sensorsignale in das Interessengebiet (20, 22) zu emittieren, deren Reflexionen von mindestens einem Empfänger (300), der von der Mehrzahl von mobilen Sensorträgerplattformen (100) räumlich getrennt ist, empfangbar sind;
wobei die Ressourcenzuweisungseinheit (200) ausgestaltet ist, einer Aufgabe, die mit einer der drei Betriebsarten verknüpft ist, mindestens eine mobile Sensorträgerplattform (100) zuzuweisen, basierend auf einem oder mehreren der folgenden Kriterien: relative Position zwischen der mobilen Sensorträgerplattform und dem Interessengebiet, Bewegungsrichtung der Sensorträgerplattform, Bewegungsrichtung eines zu beobachtenden Objekts in dem Interessengebiet, Anzahl der Sensorträgerplattformen mit Sichtverbindung zu dem Interessengebiet, Lage der Sensorträgerplattform, Ausrichtung des Sensorsignalemitters und des Sensorsignalempfängers, verfügbare Ressourcen der Sensorträgerplattform für Beobachtungsaufgaben, Priorität der Beobachtungsaufgabe.

2. Beobachtungssystem (50) nach Anspruch 1,

   wobei die Ressourcenzuweisungseinheit (200) ausgestaltet ist, die Gesamtzahl der Sensorträgerplattformen (100) mit einer Sichtverbindung zu dem Interessengebiet der Aufgabe zu ermitteln;
   wobei die Ressourcenzuweisungseinheit (200) ausgestaltet ist, bei mehreren Aufgaben zunächst eine Zuweisung nach Verfügbarkeit vorzunehmen und derjenigen Aufgabe eine Sensorträgerplattform zuzuweisen, welche die niedrigste Zahl von Sensorträgerplattformen mit Sichtverbindung zu dem betreffenden Interessengebiet hat.

3. Beobachtungssystem (50) nach Anspruch 2,
   wobei die Ressourcenzuweisungseinheit (200) ausgestaltet ist, anschließend an die Zuweisung nach Verfügbarkeit eine Zuweisung nach Priorität der Aufgaben vorzunehmen, bei der zunächst Aufgaben mit höherer Priorität an Sensorträgerplattformen zugewiesen werden.

4. Beobachtungssystem (50) nach Anspruch 3,
   wobei weitere Aufgaben nach Priorität in absteigender Reihenfolge an Sensorträgerplattformen zugewiesen werden.

5. Beobachtungssystem (50) nach einem der voranstehenden Ansprüche,
   wobei die Ressourcenzuweisungseinheit (200) ausgestaltet ist, die Zuweisung einer Aufgabe zu einer mobilen Sensorträgerplattform in gleichmäßigen oder ungleichmäßigen Zeitabständen erneut vorzunehmen.

6. Beobachtungssystem (50) nach Anspruch 5,
   wobei die Ressourcenzuweisungseinheit (200) ausgestaltet ist, die Zuweisung einer Aufgabe zu einer mobilen Sensorträgerplattform erneut vorzunehmen, wenn die Ressourcenzuweisungseinheit eine weitere Aufgabe erhält.

7. Beobachtungssystem (50) nach einem der voranstehenden Ansprüche,
   wobei die Ressourcenzuweisungseinheit (200) ausgestaltet ist, ein Kommando für die Anpassung der Lage einer Sensorträgerplattform (100) zu erzeugen und dieses Kommando an die Sensorträgerplattform zu übertragen.

8. Beobachtungssystem (50) nach einem der voranstehenden Ansprüche,
   wobei die Ressourcenzuweisungseinheit (200) ausgestaltet ist, ein Kommando für die Anpassung der Ausrichtung von Sensorsignalemitter und/oder Sensorsignalempfänger zu erzeugen und dieses Kommando an eine Sensorträgerplattform zu übertragen.

9. Beobachtungssystem (50) nach einem der voranstehenden Ansprüche,
   wobei die Mehrzahl von mobilen Sensorträgerplattformen (100) eine Mehrzahl von Satelliten in einem Erdorbit (14) ist.

10. Beobachtungssystem (50) nach Anspruch 9,
    wobei in der ersten Betriebsart und/oder der zweiten Betriebsart das Interessengebiet beobachtet wird, indem eine erste Sensorträgerplattform ein Signal emittiert und die erste Sensorträgerplattform und/oder mindestens eine andere Sensorträgerplattform die von einem beobachteten Objekt reflektierten Signale empfängt.

11. Beobachtungssystem (50) nach Anspruch 9 oder 10,
    wobei eine Sensorträgerplattform (100) ausgestaltet ist, in der ersten Betriebsart und/oder der zweiten Betriebsart das Interessengebiet basierend auf einem Zeitstempel von erfassten Daten zu beobachten, so dass der Sensorsignalemitter Radarsignale in einen Bereich des Interessengebietes emittiert, dessen Beobachtungsdaten den ältesten Zeitstempel in dem Interessengebiet haben.

12. Beobachtungssystem (50) nach einem der Ansprüche 9 bis 11,
    wobei in der dritten Betriebsart das Interessengebiet beobachtet wird, indem eine Sensorträgerplattform ein Signal emittiert und der Empfänger (300) an Bord eines in der Luft befindlichen Luftfahrzeugs angeordnet ist und die von einem beobachteten Objekt reflektierten Signale empfängt.

13. Beobachtungssystem (50) nach einem der voranstehenden Ansprüche,

wobei die Ressourcenzuweisungseinheit (200) räumlich getrennt von der Mehrzahl von mobilen Sensorträgerplattformen (100) angeordnet ist; oder

wobei die Ressourcenzuweisungseinheit (200) strukturell einer mobilen Sensorträgerplattform zugewiesen ist.

Fig. 1

Fig. 2

Fig. 3

Fig. 4

Fig. 5

Fig. 6

**EUROPÄISCHER RECHERCHENBERICHT**

Nummer der Anmeldung

EP 23 20 4517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BIANCHESSI N ET AL: "Planning and scheduling algorithms for the COSMO-SkyMed constellation", AEROSPACE SCIENCE AND TECHNOLOGY, ELSEVIER MASSON, FR, Bd. 12, Nr. 7, 1. Oktober 2008 (2008-10-01), Seiten 535-544, XP025431783, ISSN: 1270-9638, DOI: 10.1016/J.AST.2008.01.001 [gefunden am 2008-01-18] * das ganze Dokument * ----- | 1-13 | INV. B64G1/10 ADD. G01S13/90 |
| A | KIM HONGRAE ET AL: "Optimal mission scheduling for hybrid synthetic aperture radar satellite constellation based on weighting factors", AEROSPACE SCIENCE AND TECHNOLOGY, ELSEVIER MASSON, FR, Bd. 107, 20. Oktober 2020 (2020-10-20), XP086377409, ISSN: 1270-9638, DOI: 10.1016/J.AST.2020.106287 [gefunden am 2020-10-20] * das ganze Dokument * ----- -/-- | 1-13 | |

| RECHERCHIERTE SACHGEBIETE (IPC) |
|---|
| B64G G01S |

Der vorliegende Recherchenbericht wurde für alle Patentansprüche erstellt

| Recherchenort | Abschlußdatum der Recherche | Prüfer |
|---|---|---|
| München | 5. März 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

Europäisches Patentamt

European Patent Office

Office européen des brevets

## EUROPÄISCHER RECHERCHENBERICHT

Nummer der Anmeldung

EP 23 20 4517

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KIM HONGRAE ET AL: "Mission scheduling optimization of SAR satellite constellation for minimizing system response time", AEROSPACE SCIENCE AND TECHNOLOGY, Bd. 40, 1. Januar 2015 (2015-01-01), Seiten 17-32, XP093137257, FR ISSN: 1270-9638, DOI: 10.1016/j.ast.2014.10.006 Gefunden im Internet: URL:https://pdf.sciencedirectassets.com/271985/1-s2.0-S1270963814X00106/1-s2.0-S1270963814002041/main.pdf?X-Amz-Security-Token=IQoJb3JpZ2luX2VjEHoaCXVzLWVhc3QtMSJHMEUCIQCVpBo5F/uF880b6kYWinm5v+N99bpY8IUIcHMvJTgxFwIgCHzFSG3n5JUqP1W70j8J6uxW2N5/D+garOb2es/dFX8qswUIcxAFGgwwNTkwMDM1NDY4NjUiDKAWpKFXc8tB6W95K> * das ganze Dokument * ----- | 1-13 | |
| A | DE FLORIO SERGIO ET AL: "OPTIMAL OPERATIONS PLANNING FOR SAR SATELLITE CONSTELLATIONS IN LOW EARTH ORBIT", 6TH INTERNATIONAL SYMPOSIUM ON REDUCING THE COSTS OF SPACECRAFT GROUND SYSTEMS AND OPERATIONS, 17. Juni 2005 (2005-06-17), XP093137254, Gefunden im Internet: URL:https://elib.dlr.de/19853/1/Paper_S-De Florio.pdf> * das ganze Dokument * ----- -/-- | 1-13 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 5. März 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EUROPÄISCHER RECHERCHENBERICHT**

Europäisches Patentamt
European Patent Office
Office européen des brevets

Nummer der Anmeldung

EP 23 20 4517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | RODRIGUEZ-CASSOLA M ET AL: "Bistatic TerraSAR-X/F-SAR Spaceborne-Airborne SAR Experiment: Description, Data Processing, and Results", IEEE TRANSACTIONS ON GEOSCIENCE AND REMOTE SENSING, IEEE, USA, Bd. 48, Nr. 2, 1. Februar 2010 (2010-02-01), Seiten 781-794, XP011296763, ISSN: 0196-2892 * Zusammenfassung; Abbildung 1 * ----- | 12 | |
| A | D'ERRICO M. ET AL: "The BISSAT mission: A bistatic SAR operating in formation with COSMO/SkyMed X-band radar", AEROSPACE CONFERENCE PROCEEDINGS, 2002. IEEE MAR 9-16, 2002, Bd. 2, 16. März 2002 (2002-03-16), Seiten 2-809, XP093137550, DOI: 10.1109/AERO.2002.1035639 ISBN: 978-0-7803-7231-3 Gefunden im Internet: URL:https://ieeexplore.ieee.org/stampPDF/g etPDF.jsp?tp=&arnumber=1035639&ref=aHR0cHM 6Ly9pZWVleHBsb3JlLmllZWUub3JnL2RvY3VtZW50L zEwMzU2Mzk=> * das ganze Dokument * ----- | 12 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 5. März 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)